## Europäisches Patentamt
## European Patent Office
## Office européen des brevets

(19)

(11) Veröffentlichungsnummer: **0 151 307**
**B1**

# (12) EUROPÄISCHE PATENTSCHRIFT

(45) Veröffentlichungstag der Patentschrift:
**31.08.88**

(51) Int. Cl.⁴: **B 28 B 3/00,** C 04 B 35/64

(21) Anmeldenummer: **84116123.5**

(22) Anmeldetag: **21.12.84**

(54) **Verfahren zur Herstellung von hochtemperaturbeständigen, hochdichten keramischen Formkörpern.**

(30) Priorität: **28.01.84 DE 3402979**

(43) Veröffentlichungstag der Anmeldung:
**14.06.85 Patentblatt 85/33**

(45) Bekanntmachung des Hinweises auf die Patenterteilung:
**31.08.88 Patentblatt 88/35**

(84) Benannte Vertragsstaaten:
**DE FR GB SE**

(56) Entgegenhaltungen:
GB-A-1 149 347
US-A-2 089 030
US-A-4 051 590

THE AMERICAN CERAMIC SOCIETY BULLETIN,
Band 54, Nr. 2, 1975, Seiten 201-205,207, Columbus,
Ohio; K.H. HÄRDTL: "Gas isostatic hot pressing
without molds"

(73) Patentinhaber: **Nukem GmbH, Rodenbacher
Chaussee 6 Postfach 11 00 80, D-6450 Hanau 11
(DE)**

(72) Erfinder: **Hrovat, Milan, Dr. Dipl.- Ing., Meisenweg
7, D-6458 Rodenbach (DE)**
Erfinder: **Huschka, Hans, Dr. Dipl.- Chem.,
Grünaustrasse 5, D-6450 Hanau 9 (DE)**
Erfinder: **Porth, Heinrich, Sudetendeutsche
Strasse 59, D-6450 Hanau 8 (DE)**
Erfinder: **Rachor, Lothar, Seligenstädterstrasse 79,
D-6450 Hanau 8 (DE)**
Erfinder: **Schmidt- Hansberg, Thomas, Dr.,
Fuchshohl 67, D-6000 Frankfurt 50 (DE)**

(74) Vertreter: **Nowak, Gerhard, DEGUSSA AG
Fachbereich Patente Rodenbacher Chaussee
Postfach 1345, D-6450 Hanau 1 (DE)**

# 0 151 307

**Beschreibung**

Die Erfindung betrifft ein Verfahren zur Herstellung von hochtemperaturbeständigen, hochdichten keramischen Formkörpern aus einer oder mehreren Komponenten durch Krafteinwirkung auf Preßlinge bei Temperaturen oberhalb 1300°C und hohem Druck in einer Pressmatrize.

Hochtemperaturbeständige keramische Formkörper zeichnen sich durch eine Reihe von Vorteilen aus; insbesondere die mechanische Beanspruchbarkeit oberhalb 1200°C spielt hierbei eine wesentliche Rolle. Als Werkstoffe dienen beispielsweise hochtemperaturbeständige Oxide, Karbide, Nitride, Silizide, Boride und Mischungen dieser Substanzen.

Die bisher im technischen Maßstab erprobten Verfahren zur Herstellung solcher Formkörper beruhen hauptsächlich auf dem Pressen von Pulvern bzw. Pulvergemischen und anschließendem Sintern der Preßlinge (Preß-Sinter-Verfahren). Darüberhinaus sind auch Verfahren bekannt, unbehandelte bzw. vorgesinterte keramische Formkörper durch heißisostatisches Pressen (HIP) zu verarbeiten (z. B. Am. Ceram. Soc. Bull. 54 (1975), Vol. 2, 201-205).

Da die Arbeitstemperaturen aus Materialgründen sowohl beim Sintern als auch beim Heißpressen auf kleiner 2000°C begrenzt sind, lassen sich die erforderlichen hohen Dichtewerte, insbesondere bei hochschmelzender Keramik, üblicherweise nur durch den Zusatz von Sinterhilfsmitteln erreichen. Diese können sich jedoch auf das bei Hochtemperaturbeanspruchungen unerwünschte Kriechverhalten nachteilig auswirken. Ein wesentlicher Nachteil besteht auch in der Dauer des Sintervorganges (mehrere Stunden).

Beim heißisostatischen Pressen kommt hinzu, daß Wärme und Druck auf Preßling und Matrize gleichzeitig über längere Zeit einwirken. Dies erfordert äußerst aufwendige Konstruktionen, insbesondere zur thermischen Isolierung der heißen Anlagenkomponenten. Der Presszyklus als solcher dauert ebenfalls lange und liegt üblicherweise im Stundenbereich.

Es war daher Aufgabe der vorliegenden Erfindung, ein Verfahren zur Herstellung hochtemperaturbeständiger, hochdichter keramischer Formkörper aus einer oder mehreren Komponenten durch Krafteinwirkung auf Preßlinge bei Temperaturen oberhalb 1300°C und hohem Druck in einer Preßmatrize zu entwickeln, das sehr rasch abläuft, ohne übermäßige Beanspruchung der Matrize und ohne Anwendung von Sinterhilfsmitteln.

Diese Aufgabe wird dadurch gelöst, daß die Preßlinge außerhalb der Preßmatrize auf die erforderliche Preßtemperatur aufgeheizt werden und anschließend durch einen schnell beweglichen Preßstempel mit einer Geschwindigkeit von I bis 10 m/sec in die kalte, von der Gegenseite durch einen Unterstempel verschlossene Preßmatrize überführt, dort verdichtet und in Preßrichtung aus der Preßmatrize ausgestoßen werden, wobei die Summe aus der Transportzeit der Preßlinge vom Aufheizofen bis zur Preßmatrize und der Verweilzeit in der Preßmatrize so bemessen ist, daß das im Preßling sich ausbildende Temperaturgefälle zwischen Preßlingkern und Presslingoberfläche 150°C nicht überschreitet und die Verweilzeit in der Preßmatrize weniger als 3 msec beträgt.

Als vorteilhaft hat es sich erwiesen, wenn die erhitzten Preßlinge während des Transport- und Pressvorgangs um höchstens 100°C auf der Preßlingoberfläche abkühlen, was einen raschen Transport des Presslings zwischen Aufheizofen und Matrize voraussetzt. Dieser Transport erfolgt vorzugsweise mittels einer Fallstrecke, die vor der Matrizenöffnung endet.

Als vorteilhaft hat es sich auch herausgestellt, die Preßtemperatur unterhalb des Schmelzpunktes der niedrigstschmelzenden Komponente des Formkörpers zu belassen, wenn der Formkörper mehrere Substanzen enthält. Vorzugsweise liegt die Preßtemperatur etwa 100°C unterhalb des Schmelzpunktes der niedrigstschmelzenden Komponente.

Die wesentlichen Vorteile des erfindungsgemäßen Verfahrens bestehen darin, daß im Gegensatz zu den anderen Heißpreßmethoden aufgrund der hohen Preßgeschwindigkeiten Wärme und Druck weitestgehend entkoppelt sind und daher nur über einen sehr kurzen Zeitraum (< 3 msec) gleichzeitig auf den Preßling wirken. Dadurch werden alle Wechselwirkungen zwischen Preßling und Werkzeug vermieden, da diese eine gewisse Zeit benötigen, und die Preßmatrizen nicht übermäßig beansprucht. Außerdem sind keine Sinterhilfsmittel notwendig.

Ein weiterer Vorteil des erfindungsgemäßen Verfahrens besteht darin, daß die Preßlinge außerhalb der Pressmatrize sehr rasch aufgeheizt werden können, insbesondere im oberen, wegen möglicherweise auftretenden Verdampfungen bzw. beginnenden Zersetzungen sensiblen Temperaturbereich (> 1200°C), wo die hochschmelzende Keramik keine Sprödigkeit mehr aufweist. In diesem Bereich konnten für Werkstoffe wie Zirkonoxid ($ZrO_2$), Aluminiumoxid/Titankarbid ($Al_2O_3$/TiC) sowie Siliziumkarbid (SiC) Aufheizgeschwindigkeiten bis zu 100°C pro Sekunde realisiert werden.

Demzufolge kann bei dem erfindungsgemäßen Verfahren im Vergleich zu den bisher bekannten Preßverfahren um Größenordnungen schneller aufgeheizt und gepreßt werden. Die hohen Aufheiz- und Preßgeschwindigkeiten wiederum stellen die Basis für kurze Taktzeiten dar, aus denen ein deutlich geringerer konstruktiver Aufwand und äußerst niedrige Herstellungskosten resultieren.

Folgende Beispiele sollen das erfindungsgemäße Verfahren näher erläutern:

1. Als Ausgangsmaterial für die Herstellung eines Zirkonoxidzylinders (Ø 20 mm, H = 60 mm) diente ein Zirkonoxidpulver mit einer Körnung von 2 - 3 μm, einer BET-Oberfläche von ≈ 15 m²/g und einer Schüttdichte von 1,05 g/cm³. Aus diesem $ZrO_2$-Pulver wurden mit einem Preßdruck von 200 MN/m² Zylinder mit den Abmessungen Ø = 23 mm, H = 85 mm kalt vorgepreßt. Die Dichte der Grünlinge lag bei 3,2 g/cm³ -

2

entsprechend 51 % des theoretischen Wertes.

Die vorgepreßten Formkörper wurden in einem Ofen unter Inertgasatmosphäre auf 2300°C erhitzt, wobei sich der Durchmesser der Preßlinge auf 20,4 mm verringerte. Anschließend durchfielen die Preßlinge einen Fallschacht bis vor die Öffnung einer Einwegmatrize und wurden nach der optischen Auslösung mittels eines beschleunigten Preßstempels mit einer Geschwindigkeit von 4 m/sec in die Einwegmatrize (Ø = 20,6 mm) überführt und darin verdichtet. Nach Erreichen des erforderlichen Preßdruckes (500 MN/m²) wich der Gegenstempel (mit Preßkraftbegrenzung) aus. Dabei fielen die fertigverdichteten Preßlinge in eine beheizte Abkühlstrecke, wo sie mit einer mittleren Abkühlgeschwindigkeit von 25°C/sec auf Raumtemperatur gebracht wurden. Der Preß- und Ausstossvorgang bzw. die Verweilzeit in der Einwegmatrize betrug 1,8 Millisekunden. Getrennte Messungen ergaben, daß das Temperaturgefälle zwischen Preßlingkern und Preßlingoberfläche vor der Einwegmatrize bei Beginn des Preßvorgangs bei 100°C lag. Die fertiggepreßten Formkörper hatten einen Durchmesser von 19,9 mm und eine Höhe von 59,7 mm. Die Dichte lag mit 6,09 g/cm³ bei 97,1 % des theoretischen Wertes.

2. Als Ausgangsmaterialien für die Herstellung von Plättchen (15 x 15 x 2 mm) wurden $Al_2O_3$- und TiC-Pulver mit folgenden Eigenschaften herangezogen:

| $Al_2O_3$ | mittlere Körnung | 3 | $\mu$m |
|---|---|---|---|
| | BET-Oberfläche | 15 | m²/g |
| | Schüttdichte | 0,8 | g/cm³ |
| TiC | Körnung | <1 | $\mu$m |
| | BET-Oberfläche | 13 | m²/g |
| | Schüttdichte | 0,6 | g/cm³ |

Nach dem Mischen beider Komponenten im Verhältnis 3 : 2 (60 Gew.-% $Al_2O_3$/40 Gew.-% TiC) wurde das Pulvergemisch in einer Vierkantmatrize mit einem Preßdruck von 200 MN/m² zu quadratischen Platten mit den Abmessungen 16 x 16 x 3mm verdichtet. Die Dichte der bei Raumtemperatur vorgepreßten Grünlinge lag bei 2,2 g/cm³ - entsprechend 54 % des theoretischen Wertes.

Die vorgepreßten Formkörper wurden in Inertgasatmosphäre auf 1950°C erhitzt, hierbei verringerten sich die Abmessungen der Formkörper im heißen Zustand auf 15,2 x 15,2 x 2,9 mm. Anschließend wurden die Formkörper analog Beispiel 1 verdichtet.

Die fertiggepreßten Platten hatten folgende Abmessungen:
14,9 x 14,9 x 1,95 mm. Die Dichte lag mit 3,9 g/cm³ bei 96,8 % des theoretischen Wertes.

## Patentansprüche

1. Verfahren zur Herstellung hochtemperaturbeständiger, hochdichter keramischer Formkörper aus einer oder mehreren Komponenten durch Krafteinwirkung auf Preßlinge bei Temperaturen oberhalb 1300°C und hohem Druck in einer Preßmatrize
dadurch gekennzeichnet,
daß die Preßlinge außerhalb der Preßmatrize auf die erforderliche Preßtemperatur aufgeheizt werden und anschließend durch einen schnell beweglichen Preßstempel mit einer Geschwindigkeit von 1 bis 10 m/sec in die kalte, von der Gegenseite durch einen Unterstempel verschlossene Preßmatrize überführt, dort verdichtet und in Preßrichtung aus der Preßmatrize ausgestoßen werden, wobei die Summe aus der Transportzeit der Preßlinge vom Aufheizofen bis zur Preßmatrize und der Verweilzeit in der Preßmatrize so bemessen ist, daß das im Preßling sich ausbildende Temperaturgefälle zwischen Preßlingkern und Preßlingoberfläche 150°C nicht überschreitet und die Verweilzeit in der Preßmatrize weniger als 3 msec betragt.

2. Verfahren nach Anspruch 1,
dadurch gekennzeichnet,
daß sich die erhitzten Preßlinge während des Transport- und Preßvorgangs um maximal 100°C auf der Preßlingoberfläche abkühlen.

3. Verfahren nach Anspruch 1 und 2,
dadurch gekennzeichnet,
daß die Preßtemperatur unterhalb des Schmelzpunktes der niedrigstschmelzenden Komponente des Formkörpers liegt.

4. Verfahren nach Anspruch 1 bis 3,
dadurch gekennzeichnet,
daß die Preßtemperatur etwa 100°C unterhalb des Schmelzpunktes der niedrigstschmelzenden Komponente liegt.

**Revendications**

1. Procédé pour la fabrication de corps moulés céramiques à haute densité, résistant à des températures élevées à partir d'un ou plusieurs composants, par application d'une force sur des comprimés, dans une matrice à compression, à des températures supérieures à 1300°C et sous une pression élevée, caractérisé en ce que l'on chauffe à la température de compression requise les comprimés, à l'extérieur de la matrice de compression, et les transfère ensuite, à une vitesse de 1 à 10 m/s, au moyen d'un poinçon pouvant se déplacer rapidement, dans la matrice froide de compression, fermée au côté opposé par un poinçon inférieur, on les y compacte, puis on les éjecte hors de la matrice de compression, dans le sens de la compression, la durée totale, somme de la durée du transport des comprimés, du four de chauffe à la matrice de compression, et du temps de séjour dans la matrice de compression, étant telle que, dans le comprimé, la chute de température, qui se produit entre le coeur du comprimé et la surface du comprimé, n'excède pas 150°C, et le temps de séjour dans la matrice de compression étant inférieur à 3 m/s.

2. Procédé selon la revendication 1, caractérisé en ce que les comprimés chauffés se refroidissent de 100°C au maximum à la surface des comprimés, pendant le processus de transport et le processus de compression.

3. Procédé selon la revendication 1 ou 2, caractérisé en ce que la température de compression est inférieure au point de fusion du composant à point de fusion le plus bas du corps moulé.

4. Procédé selon l'une quelconque des revendications 1 à 3, caractérisé en ce que la température de compression est d'environ 100°C inférieure au point de fusion le plus bas.

**Claims**

1. A process for the production of high temperature resistant, high density ceramic moulded articles from one or more components by the effect of force on compacts at temperatures above 1,300°C and at high pressure in a pressing die, characterised in that the compacts are heated to the necessary pressing temperature outside the pressing die and are subsequently transferred at a speed of from 1 to 10 m/sec by a rapidly moving pressing plunger into the cold pressing die which is closed from the opposite side by a lower plunger, are compacted therein and are ejected from the pressing die in the pressing direction, the sum of the time for conveying the compacts from the heating oven to the pressing die and the residence time in the pressing die being calculated such that the temperature gradient arising between the core and the surface of the compact in the compact does not exceed 150°C and the residence time in the pressing die is less than 3 msec.

2. A process according to claim 1, characterised in that the heated compacts cool by a maximum of 100°C on the surface of the compact during the conveying and pressing process.

3. A process according to claims 1 and 2, characterised in that the pressing temperature lies below the melting point of the lowest melting point component of the moulded article.

4. A process according to claims 1 to 3, characterised in that the pressing temperature lies about 100°C below the melting point of the lowest melting point component.